# FASCICULE DE BREVET EUROPEEN

(11) **EP 4 291 478 B1**
(45) Date de publication et mention de la délivrance du brevet: **14.01.2026**
(21) Numéro de dépôt: 22702742.2
(22) Date de dépôt: 08.02.2022
(51) Int. Cl.: B62M 3/08

(54) **PÉDALE AUTOMATIQUE POUR CYCLE**
AUTOMATISCHES PEDAL FÜR FAHRRAD
AUTOMATIC PEDAL FOR BICYCLE

(30) Priorité: 10.02.2021 FR 2101288
(43) Date de publication de la demande: 20.12.2023
(73) Titulaire: Pédalissime 2020, 83600 FREJUS (FR)
(72) Inventeur: NOBILE, Pascal, 38220 LAFFREY (FR)
(74) Mandataire: Talbot, Alexandre
(86) Numéro de dépôt international: PCT/EP2022/052934
(87) Numéro de publication internationale: WO 2022/171587

(56) Documents cités:
- EP-A1- 0 174 259
- WO-A1-2011/010757
- CN-U- 208 021 662
- DE-U1- 29 901 785
- US-A1- 2008 163 721

## Description

### Domaine technique

L'invention est relative à une pédale automatique pour cycle et à un ensemble formé d'une pédale automatique et d'une chaussure.

### Technique antérieure

Il est connu de très nombreuses configurations de pédales automatiques pour cycles. Les pédales automatiques possèdent toutes un corps monté à rotation autour d'un arbre de rotation. L'arbre de rotation est monté sur le cycle et il assure la liaison mécanique entre le corps et le cycle. Lorsque le cycliste appuie sur la pédale, il applique un effort sur le corps ce qui entraine le déplacement de la pédale par rapport au cycle et la rotation du corps par rapport à l'arbre de rotation.

La pédale automatique possède généralement deux connecteurs primaires qui sont destinés à coopérer avec deux connecteurs secondaires d'une chaussure pour cycle. Il est connu d'utiliser deux connecteurs primaires montés mobiles en rotation ou un seul connecteur monté à rotation comme cela a été illustré dans le document US5,787,764, dans le document EP1780113 ou dans le document FR2768391. Les deux connecteurs primaires s'écartent pour laisser passer les connecteurs secondaires avant de se rapprocher et fixer la chaussure sur la pédale. La chaussure est munie d'un adaptateur qui se fixe sur la chaussure et qui possède les deux connecteurs secondaires. La semelle de la chaussure est séparée du corps de la pédale par l'adaptateur. Dans une alternative de réalisation, le connecteur avant de la pédale est monté fixement sur le corps.

Il existe différents types d'adaptateurs qui réalisent la connexion avec différents types de pédales. Tous les adaptateurs ne sont pas compatibles avec toutes les configurations de pédale.

De manière classique, la pédale automatique possède un arbre de rotation qui traverse totalement le corps. Une extrémité de l'arbre de rotation est fixée au cycle au moyen d'une zone filetée. L'autre extrémité de l'arbre de rotation est munie d'un bloqueur qui est généralement un écrou pour interdire la désolidarisation entre le corps et l'arbre de rotation.

Il est connu du document EP0058438 une pédale automatique qui possède un arbre de rotation traversant un corps de sorte que le corps tourne autour de l'arbre de rotation. Le corps possède un connecteur avant et deux connecteurs arrière qui permettent de fixer une chaussure sur la face supérieure du corps. Le corps est connecté à l'arbre au moyen d'une platine rotative qui permet de faire tourner le corps perpendiculairement à l'axe longitudinal de l'arbre de rotation de manière à assurer une désolidarisation entre le corps et la chaussure. Cette configuration n'est pas compacte.

Il est connu du document EP 0146454 ou du document EP 0360245 une pédale automatique avec un connecteur avant fixe et un connecteur arrière monté mobile en rotation. Cette configuration peut être améliorée dans son rendement de transmission de la puissance entre le pied et l'axe de rotation de la pédale.

Le document EP0174259 divulgue un ensemble pédale-chaussure avec une pédale possédant une cage montée mobile en rotation autour d'un arbre de rotation. La semelle définit une cavité recevant la cage. La cage définit un trou qui débouche uniquement sur une extrémité latérale ouverte pour l'insertion et l'extraction de l'arbre de rotation. Le trou possède une section qui est identique à la section de l'arbre de rotation. Cette configuration n'est pas pratique pour réaliser une fixation ou une désolidarisation rapide et efficiente entre la semelle et la pédale. La cage possède un pion mobile en translation qui s'insère dans une rainure circulaire pour bloquer la translation entre l'arbre et la cage. La cage est fixée à la semelle par quatre fixations. Ce document divulgue les caractéristiques du préambule de la revendication 1.

Le document DE29901785 divulgue une semelle avec une rainure. La rainure reçoit un arbre de rotation muni d'une rainure circulaire. La semelle est munie d'un pion qui est destiné à s'insérer dans la rainure circulaire pour empêcher la translation de l'arbre de rotation dans la rainure selon l'axe longitudinal de l'arbre de rotation.

Le document CN208021662 divulgue une pédale qui est fixée à un arbre de rotation au moyen d'un anneau rotatif. L'anneau rotatif assure la fixation de manière amovible de la pédale avec le reste du pédalier. La pédale possède une tige qui s'étend dans le prolongement de l'arbre de rotation. La tige possède une fente qui coopère avec un bloqueur pour monter fixement le corps de la pédale par rapport à la tige. Le corps de la pédale tourne autour de l'axe de rotation au moyen de l'anneau de rotation.

Le document US2008/0163721 divulgue une pédale avec un arbre de rotation qui possède une rainure faisant le tour de l'arbre. La conformation de la rainure impose un déplacement en translation du corps de la pédale par rapport à l'arbre au fur et à mesure de la rotation du corps autour de l'arbre.

Le document WO2010/010757 divulgue une pédale dont le corps est monté rotatif autour d'un arbre de rotation. Le corps est solidarisé à l'arbre rotation au moyen d'une écrou qui bloque le corps contre l'arbre. L'extrémité externe de l'arbre est filetée pour coopérer avec l'écrou. Une rondelle déformable élastiquement s'insère dans une rainure circulaire de l'arbre et dans un trou traversant du corps de la pédale pour limiter les efforts sur l'écrou.

### Objet de l'invention

Un objet de l'invention consiste en une pédale automatique pour cycle qui procure un rendement amélioré en comparaison des pédales de l'art antérieur.

Selon un aspect de l'invention, il est proposé une pédale automatique pour cycle selon la revendication 1 et préférentiellement une pédale automatique pour cycle comportant :
- un arbre de rotation destiné à être fixé à un cycle, l'arbre de rotation s'étendant selon une direction longitudinale,
- un corps monté rotatif autour de l'arbre de rotation, le corps définissant une cavité destinée à recevoir l'arbre de rotation,
- au moins des premier et deuxième connecteurs primaires destinés à coopérer avec au moins des premier et deuxième connecteurs secondaires d'une semelle d'une chaussure pour cycle pour fixer la chaussure pour cycle sur le corps.

La pédale automatique est remarquable en ce que l'arbre de rotation possède une rainure annulaire, en ce que le corps possède un orifice agencé pour déboucher face à la rainure annulaire et en ce qu'une tige s'insère dans l'orifice et dans la rainure annulaire pour limiter le déplacement en translation du corps par rapport à l'arbre de rotation selon la direction longitudinale.

De manière avantageuse, la rainure annulaire est disposée dans le quart terminal selon la direction longitudinale et opposée à l'extrémité destinée à se fixer sur le cycle.

Dans une configuration particulière, la cavité destinée à recevoir l'arbre de rotation est une cavité borgne.

Préférentiellement, la tige est munie d'une zone lisse disposée en appui sur la rainure annulaire.

Selon un mode de réalisation, le deuxième connecteur primaire est monté mobile en translation. Plus préférentiellement, le deuxième connecteur primaire est monté mobile selon une direction perpendiculaire à la direction longitudinale.

Selon un autre mode de réalisation, le deuxième connecteur primaire est associé à un ressort agencé pour déplacer le deuxième connecteur primaire vers le premier connecteur primaire en l'absence de sollicitation extérieure.

Il est avantageux de prévoir que le deuxième connecteur primaire et le ressort soient formés par une pièce dont une première extrémité forme le deuxième connecteur primaire et dont la deuxième extrémité forme le ressort.

De manière préférentielle, le premier connecteur primaire est monté fixe sur le corps. Avantageusement, le premier connecteur primaire est formé par une zone saillante du corps.

Dans un mode de réalisation particulier, le corps possède une face supérieure incurvée pour reproduire la courbure d'un pied entre les orteils et la voute plantaire, entre le premier connecteur primaire et le deuxième connecteur primaire.

L'invention a pour objet un ensemble formé par une pédale automatique pour cycle et une chaussure pour cycle qui est plus performante que les ensembles de l'art antérieur.

On tend à atteindre ce résultat au moyen d'un ensemble qui comporte une pédale automatique pour cycle selon l'une quelconque des configurations précédentes et une chaussure pour cycle. La chaussure est en appui direct sur le corps perpendiculairement à la direction longitudinale de l'arbre de rotation et en appui sur l'arbre de rotation au moyen du corps perpendiculairement à la direction longitudinale de l'arbre de rotation.

Préférentiellement, une semelle de la chaussure est en contact direct avec le corps de manière continue entre le premier connecteur primaire disposé à l'avant du corps et la zone du corps disposée perpendiculairement à la direction longitudinale XX de l'arbre de rotation.

Dans un mode de réalisation particulier, la chaussure possède une semelle qui définit un creux avant destiné à être disposé sous des orteils d'un pied et un creux arrière destiné à être disposé sous la voute plantaire du pied.

De manière avantageuse, le creux avant forme une première bosse sur la face du dessus de la semelle et le creux arrière forme une deuxième bosse sur la face du dessus de la semelle.

Dans une configuration intéressante, la profondeur du creux avant est supérieure à l'épaisseur de la semelle autour du creux avant et la profondeur du creux arrière est supérieure à l'épaisseur de la semelle autour du creux arrière.

Il est également intéressant de prévoir que la chaussure possède une semelle qui définit une surépaisseur centrale destinée à faire face à un talon d'un pied et s'étendant selon la direction longitudinale de la semelle pour augmenter la rigidité d'un talon de la semelle.

Avantageusement, la chaussure possède une zone métatarsienne munie de crampons, les crampons étant montés en saillie de la face de dessous de la semelle et les premier et deuxième connecteurs secondaire sont montés affleurant de la face de dessous de la semelle.

De manière préférentielle, les crampons sont disposés uniquement autour du corps de la pédale automatique lorsque la chaussure est fixée à la pédale automatique.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre schématiquement une vue de côté d'une semelle montée sur un corps de pédale lui-même monté à rotation autour d'un arbre de rotation ;
- la figure 2 illustre schématiquement un arbre de rotation ;
- la figure 3 illustre schématiquement une pédale automatique pour cycle ;
- la figure 4, illustre schématiquement, en vue de dessous, un autre mode de réalisation d'un connecteur primaire arrière d'une pédale pour cycle une pédale automatique pour cycle ;
- la figure 5, illustre schématiquement, en vue de dessus, la pédale automatique illustrée à la figure 4 ;
- la figure 6, illustre schématiquement une vue de dessous d'une pédale fixée à une semelle de chaussure ;
- la figure 7, illustre schématiquement, en vue de dessus, une semelle particulièrement bien adaptée à coopérer avec une pédale selon l'invention ;
- la figure 8, illustre schématiquement, en vue de dessous, une semelle particulièrement bien adaptée à coopérer avec une pédale selon l'invention ;
- la figure 9, illustre schématiquement une opération de chaussage de la chaussure sur la pédale automatique ;
- la figure 10, illustre schématiquement une opération de déchaussage de la chaussure avec la pédale automatique ;
- la figure 11, illustre schématiquement un connecteur secondaire avant destiné à être fixé à une semelle de chaussure ;
- la figure 12, illustre schématiquement un connecteur secondaire arrière destiné à être fixé à une semelle de chaussure.

### Description des modes de réalisation

Afin d'améliorer le rendement de la transmission de puissance entre le pied du cycliste et le pédalier, il est avantageux de modifier la configuration d'une pédale automatique 1 pour cycle. Il est notamment avantageux de modifier la configuration de la pédale automatique 1 pour réduire autant que possible la distance entre la face inférieure du pied et l'axe de rotation de la pédale automatique 1 pour augmenter le rendement de transmission de puissance depuis le pied jusqu'au cycle.

La pédale automatique 1 pour cycle comporte un arbre de rotation 2 destiné à être fixé à un cycle. L'arbre de rotation 2 s'étend selon une direction longitudinale XX. La pédale automatique 1 comporte un corps 3 monté rotatif autour de l'arbre de rotation 2. Le corps 3 définit une cavité destinée à recevoir l'arbre de rotation 2.

La pédale automatique 1 comporte au moins un premier connecteur primaire 4a et un deuxième connecteur primaire 4b destinés à coopérer avec au moins un premier connecteur secondaire 5a et un deuxième connecteur secondaire 5b d'une semelle 6 d'une chaussure pour cycle pour fixer la chaussure pour cycle sur le corps 3. Le premier connecteur primaire 4a est un connecteur avant alors que le deuxième connecteur primaire 4b est un connecteur arrière. L'axe qui relie le connecteur primaire avant 4a et le connecteur primaire arrière 4b est préférentiellement perpendiculaire à l'axe longitudinal XX de l'arbre de rotation 2.

Pour améliorer le rendement, il est avantageux que l'arbre de rotation 2 possède une rainure annulaire 7. La rainure annulaire 7 fait le tour de l'arbre de rotation 2 autour de l'axe de rotation. De manière préférentielle, la rainure annulaire 7 possède une section de forme semi-circulaire. L'arbre de rotation 2 est préférentiellement en métal, de préférence dans un alliage métallique, par exemple en acier, en alliage d'aluminium ou en alliage de titane.

Le corps 3 définit un orifice agencé pour déboucher face à la rainure annulaire 7. Il existe également une tige 8 qui s'insère dans l'orifice et dans la rainure annulaire 7 pour limiter le déplacement en translation du corps 3 par rapport à l'arbre de rotation 2 selon la direction longitudinale XX. L'arbre de rotation 2 est monté dans la cavité du corps 3 jusqu'à ce que la rainure annulaire 7 vienne face à l'orifice. La tige 8 s'insère dans l'orifice du corps 3 et dans la rainure annulaire 7 ce qui autorise la rotation du corps 3 autour de l'arbre de rotation 2 tout en bloquant une translation selon la direction longitudinale XX.

L'arbre de rotation 2 est destiné à être fixé au cycle, par exemple de manière conventionnelle et préférentiellement par vissage. L'arbre de rotation 2 est muni à une première extrémité, dite extrémité interne, d'un moyen de fixation 2a configuré pour fixer l'arbre de rotation 2 avec le cycle, par exemple un filetage.

La puissance appliquée par le cycliste sur le corps 3 de la pédale 1 est répercutée sur l'arbre de rotation 2 et sur le pédalier. L'installation de l'arbre de rotation 2 à l'intérieur du corps 3 avec la fixation de l'arbre de rotation 2 au moyen d'une tige 8 qui autorise la rotation tout en empêchant sa désolidarisation permet de réaliser une pédale plus compacte. Le gain en compacité permet de rapprocher le sommet du corps 3 et l'axe de rotation ce qui permet d'améliorer de rendement de la transmission de puissance. Le corps 3 possède une zone centrale 3a, dite zone métatarsienne, destinée à être face à la zone métatarsienne du pied perpendiculairement à l'axe longitudinal XX lors du pédalage.

De manière préférentielle, la face supérieure du corps 3 est plate ou incurvée entre le premier connecteur primaire 4a et le deuxième connecteur primaire 4b. La forme incurvée peut être obtenue avec une face supérieure ayant une courbure constante ou avec des zones ayant des courbures différentes avec de multiples pans plans.

Préférentiellement, la courbure de la face supérieure du corps 3 reproduit la courbure de la face inférieure de la semelle 6 de la chaussure pour avoir une surface de contact la plus étendue possible entre la pédale et la semelle.

Préférentiellement, la courbure de la face supérieure du corps 3 reproduit la courbure de l'avant du pied du cycliste. En courbant la face supérieure du corps 3 comme la face inférieure de la chaussure et comme le pied, on évite d'installer une platine d'interface entre la face supérieure du corps 3 et la face inférieure de la chaussure. Dans les configurations de l'art antérieur avec une semelle rigide, la semelle est courbée pour faciliter le déroulé du pied lors de la marche. Cependant, les corps possèdent une surface supérieure plane ce qui impose l'installation d'une platine d'adaptation. En supprimant la platine d'adaptation, il est possible de rapprocher la face inférieure du pied et l'axe de rotation ce qui améliore le rendement. La courbure de la face supérieure du corps 3 est une courbure légère qui correspond sensiblement à la courbure du pied entre sa partie avant et sa voute plantaire de sorte que la zone métatarsienne de la semelle soit la zone qui appuie sur l'arbre de rotation 2 en appuyant directement sur le corps pour un meilleur transfert de la puissance.

Dans un mode de réalisation avantageux, l'arbre de rotation 2 se trouve sous la zone métatarsienne du pied de sorte que l'appui provoqué par le pied soit plus efficace.

Avantageusement, le premier connecteur primaire 4a est monté fixe sur le corps 3. Le premier connecteur primaire 4a est destiné à coopérer avec le premier connecteur secondaire 5a de la semelle 6 qui se trouve à l'avant.

Il est particulièrement avantageux que le premier connecteur primaire 4a et que le deuxième connecteur primaire 4b soient montés en saillie de la face supérieure du corps 3. Il est également particulièrement avantageux que la distance qui sépare le premier connecteur primaire 4a et le deuxième connecteur primaire 4b, selon une deuxième direction YY perpendiculaire à la direction longitudinale XX de l'arbre de rotation 2, corresponde à la distance entre les orteils et la voute plantaire du pied du cycliste. Il est avantageux que le connecteur primaire arrière 4b soit monté mobile par rapport au connecteur primaire avant 4a pour ajuster l'écartement entre les deux connecteurs primaires 4a/4b et ainsi fixer la chaussure sur la pédale automatique 1.

Afin d'augmenter le rendement de la transmission de puissance entre le pied et l'arbre de rotation 2, il est avantageux d'avoir un corps 3 de pédale rigide. Il est avantageux d'avoir un corps 3 de pédale 1 qui s'étend depuis la voute plantaire jusqu'à la base des orteils.

Pour assurer la fixation du corps 3 sur l'arbre de rotation 2, une ou plusieurs rainures annulaires 7 peuvent être formées sur l'arbre de rotation 2. Une ou plusieurs tiges 8 sont montées sur le corps 3 ce qui empêche la translation du corps 3 par rapport à l'arbre de rotation 2 selon la direction longitudinale XX de l'arbre de rotation 2. Pour empêcher le déplacement en translation du corps 3 par rapport à l'arbre de rotation 2, la position de la rainure annulaire 7 le long de l'arbre de rotation 2 importe peu.

Afin de rapprocher autant que possible l'axe de rotation et la face inférieure du pied, il est préférable d'avoir un arbre de rotation 2 le plus mince possible tout en assurant la tenue des efforts mécaniques. Il est donc avantageux de limiter le nombre de rainures annulaires 7 pour assurer une raideur importante de l'arbre de rotation 2. Une seule rainure annulaire 7 est préférable. Il est également avantageux de réduire la profondeur de la rainure annulaire 7 pour ne pas trop fragiliser l'arbre de rotation 2. La rainure annulaire 7 se traduit par un amincissement de l'arbre de rotation 2.

De manière avantageuse, la rainure annulaire 7 est disposée dans le quart terminal selon la direction longitudinale XX et opposée à la première extrémité destinée à se fixer sur le cycle.

Il est particulièrement avantageux de placer la rainure annulaire 7 dans la zone d'extrémité de l'arbre de rotation 2 de manière opposée à la première extrémité qui assure la fixation entre l'arbre de rotation 2 et le cycle. Plus la rainure annulaire 7 est éloignée de la zone de fixation avec le cycle, plus les efforts appliqués par le cycliste sur la pédale et donc sur l'arbre de rotation 2 sont faibles. La rainure annulaire 7 est disposée le plus près possible de l'extrémité externe de l'arbre de rotation 2 car les contraintes mécaniques lors du pédalage sont plus faibles dans cette zone.

Il est donc plus avantageux d'avoir une rainure annulaire 7 située à l'extrémité extérieure de l'arbre de rotation 2 car cela permet d'avoir un arbre de rotation 2 plus mince tout en résistant aux efforts de pédalage.

Un élément d'étanchéité est disposé entre l'arbre de rotation et la cavité qui reçoit l'arbre de rotation 2, par exemple un joint torique. L'élément d'étanchéité est disposé pour bloquer l'introduction de poussières ou d'humidité dans la cavité qui reçoit l'arbre de rotation.

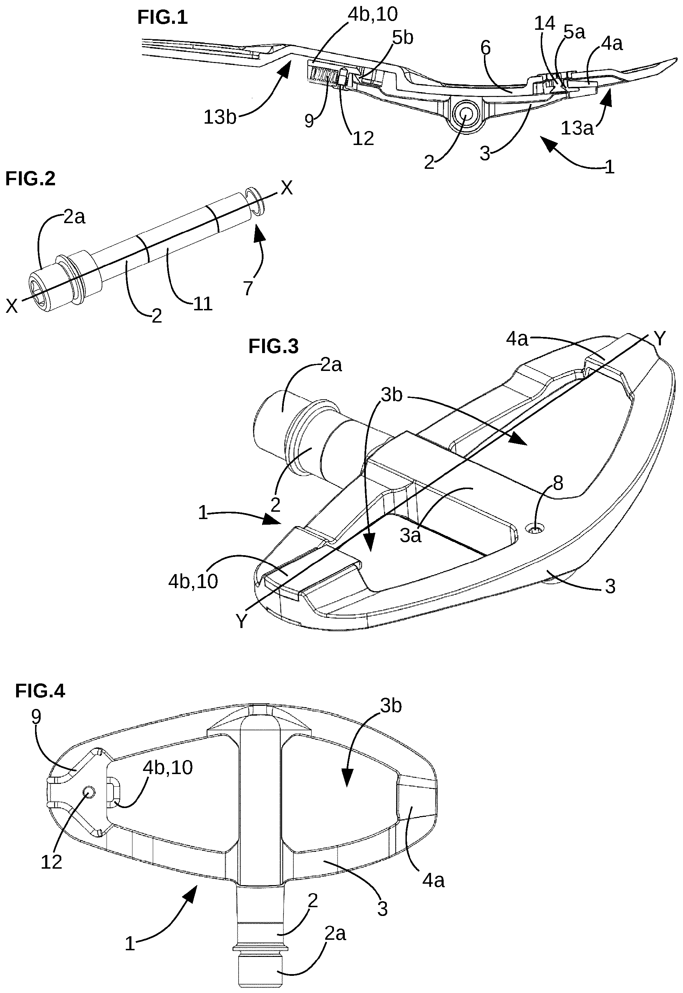

Dans un mode de réalisation particulier illustré sur les figures 3, 6 et 10, la cavité qui reçoit l'arbre de rotation 2 est une cavité borgne. En d'autres termes, l'arbre de rotation 2 ne traverse pas totalement le corps 3. Cela évite d'avoir à installer un élément d'étanchéité entre l'extrémité externe de l'arbre de rotation 2 et le corps 3 de la pédale automatique 1. L'arbre de rotation 2 sort du corps 3 uniquement par un trou. Cette configuration est plus compacte, plus étanche et plus légère car elle réduit le nombre de pièces. Cela évite d'avoir un arbre de rotation 2 qui est plus long et donc plus lourd.

Il est particulièrement avantageux que la tige 8 qui assure la fixation du corps 3 avec l'arbre de rotation 2 soit munie d'une zone lisse disposée en appui sur la rainure annulaire 7. Il est avantageux que la tige 8 possède une zone lisse ce qui assure un contact important entre la tige 8 et la rainure annulaire 7 de manière à réaliser une fixation importante sans pénaliser la rotation. La zone de contact entre la tige 8 et l'arbre de rotation 2 peut être associée à une graisse ou une huile pour faciliter le glissement.

De manière avantageuse, le trou du corps 3 destiné à recevoir la tige 8 est un trou borgne. Il est préférable que le trou possède un taraudage destiné à coopérer avec un filetage de la tige 8. Cependant, dans une alternative de réalisation, le trou peut être traversant et la tige 8 traverse le corps 3 pour prendre appui des deux côtés opposés du corps 3. La tige 8 peut être fixée au corps 3 par ses deux extrémités. Dans le mode de réalisation illustré, le trou recevant la tige 8 débouche dans la face supérieure du corps 3. Le trou peut déboucher sur la face inférieure du corps. Le trou peut avoir une orientation quelconque tant qu'il autorise l'insertion de la tige dans la rainure annulaire.

Dans une configuration préférentielle, le deuxième connecteur primaire 4b formant le connecteur primaire arrière est monté mobile en translation. L'utilisation d'un connecteur primaire arrière 4b monté mobile en translation permet d'avoir une pédale plus compacte en comparaison d'un premier connecteur primaire monté mobile en rotation. Avantageusement, le connecteur mobile arrière 4b est monté mobile en translation selon la direction YY ou il possède une composante selon la direction YY. Avantageusement, le deuxième connecteur primaire 4b est monté mobile selon une direction perpendiculaire à la direction longitudinale XX. Le deuxième connecteur primaire 4b est monté mobile en translation selon la direction longitudinale du pied du cycliste.

De manière préférentielle, le connecteur primaire arrière 4b monté en translation est en saillie de la face supérieure du corps 3 et il translate dans un plan qui est décalé de la face supérieure du corps 3. Le plan de translation est surélevé par rapport à la surface supérieure du corps 3 de sorte que le point de contact entre le connecteur primaire arrière 4b et le connecteur secondaire arrière 5b soit au-dessus de la face supérieure du corps 3. Le point de contact se trouve au-dessus de la pédale ce qui est préférable mécaniquement. De manière préférentielle, le connecteur primaire arrière 4b est l'élément le plus haut de la partie arrière de la pédale, c'est-à-dire la partie disposée à l'arrière de la pédale par rapport à l'axe de rotation.

Il est alors avantageux que le connecteur s'insère dans un renfoncement de la semelle 6 et non dans une cavité d'une platine d'adaptation montée en saillie de la semelle 6. Le document EP 0531873 illustre une pédale automatique dans laquelle un connecteur avant s'enfonce dans une cavité d'une platine d'adaptation et un connecteur arrière se décale en translation pour recevoir un connecteur arrière de la chaussure en saillie de la semelle. Le connecteur arrière se trouve sous le plan de contact entre la platine d'adaptation et le corps de la pédale ce qui impose une augmentation importante de la distance entre le pied du cycliste et l'axe de rotation et donc une perte de rendement lors du pédalage. Cela implique également l'utilisation d'une platine d'adaptation et donc une gêne lors de la marche avec la chaussure. Une configuration similaire est illustrée dans le document WO 88/06315 ou dans le document EP 0408208.

De manière avantageuse, le deuxième connecteur primaire 4b est associé à un ressort 9 agencé pour déplacer le deuxième connecteur primaire 4b par rapport au premier connecteur primaire 4a de préférence vers le premier connecteur primaire 4a en l'absence de sollicitation extérieure. Le ressort 9 peut être formé par toute configuration adaptée. Le ressort 9 peut être un ressort en compression ou un ressort en élongation. Dans le mode de réalisation illustré à la figure 1, le ressort est un ressort hélicoïdal, mais un ressort de torsion, un ressort à lame ou une autre configuration de ressort est possible. Le ressort peut être formé par un élément qui se déforme élastiquement dans une cavité comme cela est illustré à la figure 4. La déformation du ressort 9 génère une force entre une gâche du connecteur primaire et le connecteur secondaire. Dans ce mode de réalisation particulier, le ressort 9 est monolithique avec le deuxième connecteur primaire 4b.

Dans le mode de réalisation de la figure 4, le deuxième connecteur primaire 4b et le ressort 9 sont formés par la même pièce. Une deuxième extrémité de la pièce se déforme élastiquement pour former le ressort 9 lorsque la première extrémité de la pièce se déplace à cause du deuxième connecteur secondaire 5b. Préférentiellement, la pièce se présente sous la forme d'un fil.

Dans le mode de réalisation de la figure 3, le connecteur primaire arrière 4b possède une gâche 10 sous la forme d'une plaque associée mécaniquement et fonctionnellement au ressort 9. Dans le mode de réalisation de la figure 4, le connecteur primaire arrière 4b possède une gâche 10 sous la forme d'un téton filaire qui est prolongé par le ressort 9. Il est possible de combiner ces deux modes de réalisation pour avoir une gâche sous la forme d'un téton filaire associée mécaniquement et fonctionnellement au ressort 9 (mode non illustré).

Il est particulièrement avantageux de prévoir que le connecteur primaire avant 4a soit monté fixe sur le corps 3. Le connecteur primaire avant 4a permet de fixer la partie avant de la chaussure sur le corps 3 de la pédale 1. Le connecteur primaire arrière 4b se déplace en translation pour assurer la fixation de la chaussure.

Il est particulièrement avantageux que le corps 3 et le connecteur primaire avant 4a soit formés par une seule et même pièce, c'est-à-dire dans le même matériau et indémontables l'un par rapport à l'autre. Une telle configuration est illustrée aux figures 1, 3, 6, 9 et 10. De manière préférentielle, le connecteur primaire avant 4a est réalisé monolithique avec le corps 3, c'est-à-dire non démontable. Le connecteur primaire avant 4a est avantageusement formé par une portion en saillie du corps 3.

Le connecteur primaire avant 4a et le connecteur primaire arrière 4b sont préférentiellement réalisés dans un métal, par exemple un alliage métallique. Par exemple, les connecteurs primaires 4a et 4b sont réalisés dans un acier, un laiton, un alliage d'aluminium

Dans les modes de réalisation illustrés, le chaussage de la semelle sur la pédale automatique se traduit par un écartement du deuxième connecteur primaire 4b par rapport au premier connecteur primaire 4a. Cependant, il est également possible de prévoir une configuration dans laquelle le chaussage se traduit par un rapprochement entre le connecteur avant 4a et le connecteur arrière 4b. Il est possible d'orienter le connecteur différemment dans la glissière et de décaler la position du ressort 9 ou de changer de type de ressort 9. Par exemple un ressort en compression est remplacé par un ressort en traction.

Il est également avantageux que la pédale automatique 1 soit ajourée de part et d'autre de l'arbre de rotation 2 et entre les connecteur primaires 4a/4b pour réduire le poids de la pédale automatique 1. Dans le mode de réalisation illustré, le corps 3 définit deux trous traversants 3b séparés par l'arbre de rotation 2.

Il est également avantageux que le corps 3 définisse la glissière pour une gâche 10 du connecteur primaire arrière 4b. La gâche 10 se déplace en translation dans la glissière. Le corps définit préférentiellement le logement pour le ressort 9.

Pour améliorer la transmission d'effort entre le pied et la pédale, il est avantageux que la face supérieure du corps 3 définisse avec la face inférieure de la semelle 6 une surface continue de contact qui s'étend depuis la zone métatarsienne de la pédale faisant face à l'arbre de rotation et jusqu'au connecteur primaire avant 4a. L'appui continu permet de limiter la déformation de la semelle 6 dans sa partie avant. En alternative ou en combinaison, il est avantageux que la face supérieure du corps 3 définisse avec la face inférieure de la pédale une surface continue de contact qui s'étend depuis la zone métatarsienne de la pédale faisant face à l'arbre de rotation et jusqu'au connecteur primaire arrière 4b. L'appui continu permet de limiter la déformation de la semelle 6 dans sa partie arrière. Il est particulièrement avantageux que la semelle 6 de la chaussure soit en contact direct avec le corps 3 de manière continue entre le premier connecteur primaire 4a disposé à l'avant du corps 3 et la zone du corps 3 disposée perpendiculairement à la direction longitudinale XX de l'arbre de rotation 2.

Pour faciliter la marche et réduire le glissement, il est avantageux que la semelle 6 soit pourvue de crampons. Cependant, pour ne pas pénaliser le rendement du pédalage, les crampons ne viennent pas en contact de la face supérieure du corps 3. Il est avantageux que les crampons soient situés sur le pourtour de la partie avant de la pédale 1 à l'extérieur de la zone délimitée par le corps. Il est avantageux que la partie interne du corps 3 de la pédale soit décalée vers l'arbre de rotation 2 et/ou amincie de manière à autoriser l'utilisation d'une chaussure munie de crampons sur une portion interne de la semelle. Les crampons sont autour du corps 3 sur les portions interne et externe de la semelle 6. Le décalage de la partie interne du corps 3 permet une désolidarisation par rotation du pied sans être gêné par les crampons. Les crampons internes viennent dans le trou 3b ou les trous 3b de la pédale lors du déchaussage. Préférentiellement, les crampons sont disposés uniquement autour du corps de la pédale automatique lorsque la chaussure est fixée à la pédale automatique 1. La zone métatarsienne centrale de la semelle est dépourvue de crampon pour ne pas éloigner le pied et l'axe de rotation. La zone métatarsienne interne de la semelle est dépourvue de crampon pour ne gêner la rotation du pied. La zone métatarsienne externe de la semelle peut être pourvue de crampons. Il est également avantageux d'installer des crampons dans la zone arrière de la semelle, par exemple face au talon.

Pour améliorer la rotation du corps 3 par rapport à l'arbre de rotation 2, il est avantageux de monter au moins un palier 11 entre l'arbre de rotation 2 et le corps 3 comme cela est illustré à la figure 2. Lorsqu'un palier 11 est présent, il est avantageux de placer la rainure annulaire 7 entre le palier 11 et l'extrémité externe de l'arbre de rotation 2. Le palier 11 peut être un palier lisse ou un palier à roulement.

La solution technique proposée est particulièrement intéressante car elle comporte peu de pièces et notamment, dans un cas particulier, un corps 3 définissant le connecteur primaire avant 4 et la glissière du connecteur arrière 4b, un arbre de rotation 2, au moins un palier 11, une tige 8, une gâche 10, un ressort 9 et éventuellement un moyen de fixation 12 du ressort 9 sur le corps 3. Il est alors possible de former une pédale automatique économique, rigide et efficace.

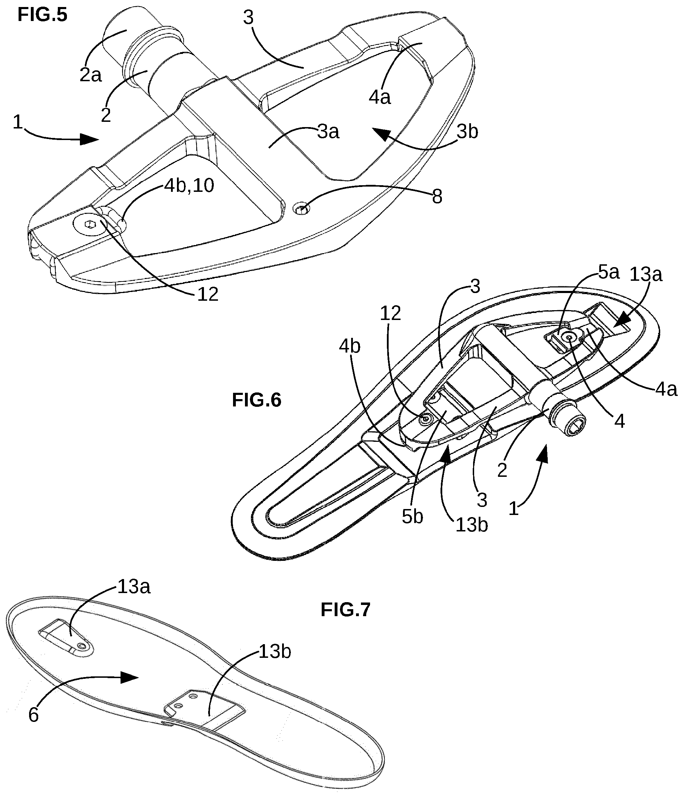

Les figures 4 et 5 illustrent un mode de réalisation particulier d'un connecteur primaire arrière 4b qui forme également un ressort 9. Le connecteur primaire arrière 4b et le ressort 9 sont formés par la même pièce qui se monte sur le corps 3 et qui est maintenue en position au moyen d'une plaque et du moyen de fixation 12. Le moyen de fixation 12 se présente préférentiellement sous la forme d'une vis. Le corps 3 et la plaque forment une glissière ce qui impose la translation du connecteur primaire arrière 4b. En se déplaçant vers l'arrière, le connecteur primaire arrière 4b déplace les pates du ressort 9 ce qui applique un effort visant à ramener le connecteur primaire arrière 4b dans sa position d'équilibre. La figure 1 illustre une autre configuration avec un ressort 9 logé dans le corps 3. Le ressort 9 applique un effort qui place le connecteur primaire arrière 4b dans sa position d'équilibre, par exemple en le plaquant contre le corps 3. D'une manière générale, le chaussage contraint le ressort 9.

Il existe également un avantage à utiliser un ensemble formé par une pédale automatique pour cycle 1 selon l'une quelconque des configurations précédentes et une chaussure pour cycle qui est dépourvue de platine d'adaptation.

En l'absence de platine d'adaptation, la semelle 6 de la chaussure est en appui direct sur le corps 3 perpendiculairement à la direction longitudinale XX de l'arbre de rotation 2. La chaussure est également en appui sur l'arbre de rotation 2 au moyen du corps 3 perpendiculairement à la direction longitudinale XX de l'arbre de rotation 2. Cette configuration permet de réduire la distance entre le pied et l'axe de rotation.

Les configurations présentées permettent de réduire la distance entre le pied et l'axe de rotation ce qui permet d'améliorer le rendement de pédalage.

De manière avantageuse, la semelle 6 de la chaussure est en contact direct avec le corps 3 et de manière continue entre le premier connecteur primaire 4a disposé à l'avant du corps 3 et la zone du corps 3 disposée perpendiculairement à la direction longitudinale de l'arbre de rotation 2.

De manière avantageuse, la semelle 6 est monolithique et rigide. La semelle 6 d'une chaussure de cyclisme peut être en plastique ou en matériau composite.

Par rigide, on entend préférentiellement que l'épaisseur de la semelle 6 est inférieure à 6mm et que l'application d'un effort de 25N appliqué à 170mm de la zone métatarsienne destinée à faire face à l'arbre de rotation 2 de la pédale se traduit par un déplacement inférieur ou égal à 10mm, la zone métatarsienne 9 étant encastrée. L'effort et le déplacement sont appliqués et mesurés à 170mm en direction du talon afin de représenter un effort de pédalage. Plus la semelle est fine et plus la distance entre le pied et l'axe de rotation est faible ce qui améliore le rendement. Il y a également un intérêt à avoir une semelle rigide pour que la puissance fournie par le pied soit mieux transmise à la pédale.

La semelle 6 est avantageusement réalisée en matériau plastique, préférentiellement sous la forme d'un matériau composite. Il est également possible de réaliser la semelle 6 dans un matériau composite comportant des fibres de carbone et/ou des fibres de verres. Il est également possible de réaliser la semelle 6 avec un matériau métallique.

La semelle 6 possède une face inférieure (ou face du dessous) destinée à venir en contact du sol lors de la marche. La face inférieure est incurvée dans sa partie avant entre la voute plantaire et l'extrémité avant du pied afin de reproduire la courbure du pied. Pour faciliter la marche, il est particulièrement intéressant que la zone métatarsienne soit dépourvue de platine d'adaptation de sorte que le déroulé du pied soit le plus naturel possible malgré une semelle 6 rigide.

La semelle 6 monolithique définit un creux avant 13a destiné à coopérer avec le connecteur primaire avant 4a. Le creux avant 13a peut posséder ou est associé au connecteur secondaire avant 5a. Le connecteur secondaire avant 5a est avantageusement en métal et plus préférentiellement en alliage métallique, par exemple en acier, en laiton ou en alliage d'aluminium. La semelle 6 définit un creux arrière 13b destiné à coopérer avec le connecteur primaire arrière 4b. Le creux arrière 13 peut posséder ou est associé à un connecteur secondaire arrière 5b. Le connecteur secondaire arrière 5b est avantageusement en métal et plus préférentiellement en alliage métallique par exemple en acier, en laiton ou en alliage d'aluminium.

Le connecteur secondaire avant 5a et le connecteur secondaire arrière 5b sont avantageusement des connecteurs montés fixes sur la semelle 6. Les connecteurs secondaires avant et arrière 5a/5b sont fixés sur la face du dessous de la semelle 6.

Le creux avant 13a est situé entre l'extrémité avant de la semelle 6 et la zone de contact métatarsienne 13c avec la pédale automatique. De manière préférentielle, le creux avant 13a se situe sensiblement au milieu de la largeur de la semelle 6. Le connecteur secondaire avant 5a est disposé dans le creux avant 13a. Le connecteur secondaire avant 5a est disposé entre le plan courbe de la face de dessous de la semelle 6 et la face de dessus de la semelle 6. De manière préférentielle, le connecteur secondaire avant 5a est disposé affleurant la face de dessous de la semelle 6. Lorsque la face de dessous de la semelle 6 possède des crampons, le connecteur secondaire avant 5a ne vient pas en contact direct du sol. Le connecteur secondaire avant 5a ne forme pas une zone localisée en saillie de la semelle 6 ce qui évite d'augmenter le risque de glissement de la chaussure sur le sol. La chaussure possède une zone métatarsienne 13c munie de crampons. Les crampons sont montés en saillie de la face de dessous de la semelle 6 et les premier et deuxième connecteurs secondaire 5a, 5b sont montés affleurant de la face de dessous de la semelle 6.

La semelle 6 monolithique comporte sur sa face du dessous un creux arrière 13b situé entre l'extrémité arrière de la semelle 6 et la zone de contact métatarsienne 13c, de préférence face à la voute plantaire. De préférence, le creux arrière 13b est positionné sensiblement au milieu de la longueur et de la largeur de la semelle 6. Le creux arrière 13b débouche sur au moins un des côtés latéraux de la semelle 6. En débouchant sur un côté latéral, il est possible de déchausser la chaussure par rotation autour de l'axe de rotation qui passe par le connecteur avant 5a perpendiculairement au plan défini par la semelle 6.

Le creux avant 13a et le creux arrière 13b sont dimensionnés pour recevoir respectivement le connecteur primaire avant 4a et le connecteur primaire arrière 4b de manière à ce que les contacts entre les connecteurs primaires et les connecteurs secondaires soient disposés dans la profondeur desdits creux avant et arrière. Les creux avant et arrière 13a/13b forment des creux qui reçoivent les zones en saillies avant et arrière de la face supérieure du corps 3 de la pédale. Cela permet d'avoir une zone d'appui importante entre la semelle 6 et la pédale 1 dans zone métatarsienne qui fait face à l'arbre de rotation 2. Les connecteurs primaires et secondaires s'insèrent dans des creux naturels du pied ce qui ne rend pas la chaussure inconfortable. Le creux avant 13a est destiné à être disposé sous des orteils du pied et le creux arrière 13b est destiné à être disposé sous la voute plantaire du pied.

Le connecteur secondaire arrière 5b est disposé dans le creux arrière 13b et il se situe entre le plan courbe de la face de dessous de la semelle 6 et la face de dessus. Le connecteur secondaire arrière 5a n'est pas en saillie de la face de dessous de la semelle 6 pour éviter de former une zone saillante localisée qui augmente le glissement et le risque de chute.

Préférentiellement, le creux avant 13a se situe dans la zone des phalanges et le creux arrière 13b se situe dans la zone de la voute plantaire. Les creux avant et arrière 13a/13b sont dimensionnés pour recevoir respectivement au moins une partie du connecteur primaire avant 4a et du connecteur primaire arrière 4b et pour recevoir respectivement le connecteur secondaire avant 5a et le connecteur secondaire arrière 5b de manière à les installer majoritairement ou totalement dans la profondeur desdits creux avant et arrière 13a/13b. Les connecteurs secondaires avant et arrière 5a/5b ne sont pas en saillie de la semelle 6 monolithique, ce qui permet à l'utilisateur de pouvoir marcher sans que les connecteurs ne gênent le déroulement de la semelle 6 sur le sol.

En formant deux cales intégrées dans l'épaisseur de la semelle 6 et non en saillie de la face de dessous de la semelle 6, il est possible de former une chaussure qui procure un meilleur rendement de pédalage. La semelle 6 possède les connecteurs secondaires ce qui évite le montage d'une platine d'adaptation.

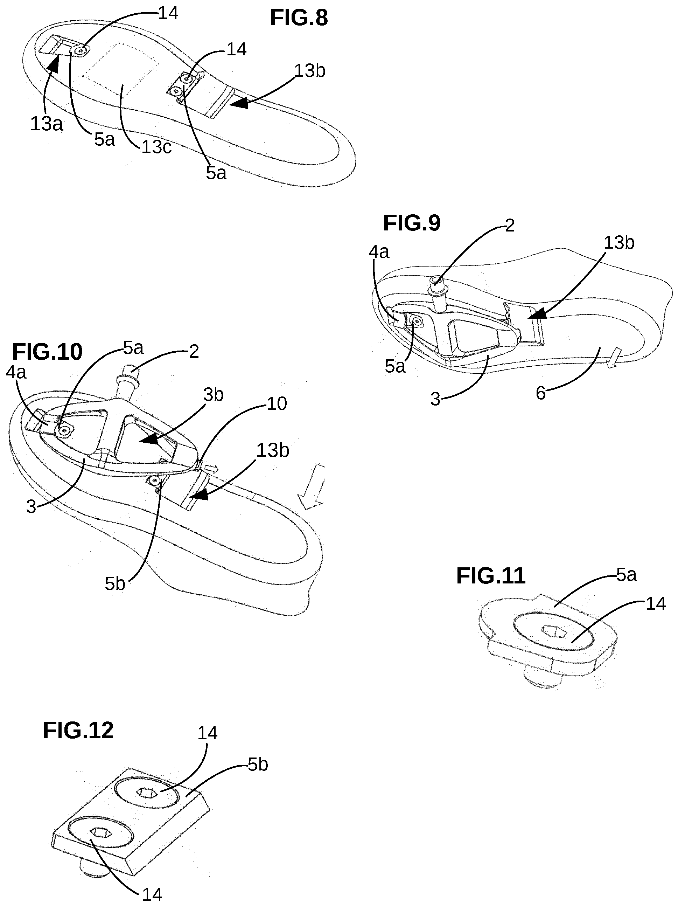

Comme illustré aux figures 7 et 8, la zone métatarsienne 13c de la semelle 6, située entre les creux avant et arrière 13a/13b, est destinée à avoir un contact direct avec la face supérieure de la pédale automatique 1 afin de transmettre directement les forces de la chaussure vers la pédale automatique 1. La zone de contact direct peut être lisse.

Il est avantageux de recouvrir la zone de contact par une couche de protection en matériau déformable, par exemple un matériau flexible. Le matériau déformable possède une épaisseur faible, par exemple moins de 1mm. Durant la marche, il est courant que des grains de sable ou des petits cailloux se fixent sous la chaussure. Le matériau déformable va se dégrader au contact de ses grains ou cailloux ce qui va éviter d'abimer la face de dessous de la semelle 6 et/ou la face de dessus du corps 3. Il est également possible de recouvrir la zone métatarsienne de la pédale par une couche de protection. La couche de protection est de faible épaisseur. La faible épaisseur des couches de protection ne dégrade pas le rendement et ne modifie pas le comportement de la semelle ou de la pédale. L'utilisation d'une couche de protection est considérée comme un contact direct entre la semelle 6 et le corps 3.

Comme illustré aux figures 6, 8, 9, 10 et 11, dans un mode de réalisation particulier, le connecteur secondaire avant 5a est positionné en contact avec un rebord arrière du creux avant 13a. Il est également avantageux que le creux avant 13a soit débouchant vers l'avant de la semelle 6 pour faciliter la fixation entre le connecteur primaire avant 4a et le connecteur secondaire avant 5a. Le connecteur secondaire arrière 5b peut être positionnée en contact avec un rebord avant du creux arrière 13b pour augmenter la tenue mécanique.

La semelle 6 peut comporter des moyens de réglage du connecteur secondaire avant 5a selon l'axe longitudinal de la semelle 6 de manière à rapprocher le connecteur secondaire avant 5a vers la pointe avant de la semelle 6 ou vers le talon. La semelle 6 peut comporter des moyens de réglage du connecteur secondaire arrière 5b selon l'axe longitudinal de la semelle 6 pour rapprocher le connecteur secondaire arrière 5b vers la pointe avant de la semelle 6 ou vers le talon.

De manière avantageuse, un insert avant est monté fixe sur la semelle 6. De préférence, l'insert avant est noyé dans la semelle 6. L'insert avant comporte des moyens de réglage configurés pour moduler la position du connecteur secondaire avant 5a dans le creux avant 13a. Par exemple, l'insert avant possède plusieurs trous filetés aptes à recevoir un élément de fixation 14 pour fixer le connecteur secondaire avant 5a sur la semelle 6. De manière préférentielle, l'insert est réalisé dans un matériau différent du matériau formant la semelle 6. Par exemple, l'insert est en métal.

De manière avantageuse, un insert arrière est monté fixe sur la semelle 6. De préférence, l'insert arrière est noyé dans la semelle 6. L'insert arrière comporte des moyens de réglage configurés pour moduler la position du connecteur secondaire arrière 5b dans le creux arrière selon l'axe longitudinal de la semelle 6, c'est-à-dire l'axe reliant les orteils et le talon. Par exemple, l'insert arrière possède plusieurs trous filetés aptes à recevoir un élément de fixation 14 pour fixer le connecteur secondaire arrière 5b sur la semelle 6. Par exemple, l'insert est en métal.

Avantageusement, les éléments de fixation 14 se présentent sous la forme de vis qui sont insérés dans des écrous formés par les inserts.

De manière privilégiée, la chaussure possède une semelle 6 qui définit une surépaisseur centrale destinée à faire face à un talon d'un pied et s'étendant selon la direction longitudinale de la semelle 6 pour augmenter la rigidité d'un talon de la semelle 6. Une telle réalisation est illustrée à la figure 6.

Selon l'illustration de la figure 10, lors d'une phase de décrochage de la chaussure depuis la position de pédalage, l'utilisateur fait un geste de rotation du pied, le talon allant vers l'extérieur du vélo. Durant ce geste, le connecteur primaire arrière 4b se déplace dans le creux arrière 13b. Durant cette première phase, la semelle 6 est toujours accrochée à la pédale automatique 1 et en poursuivant le geste de rotation du pied, la semelle 6 se décroche lorsque le connecteur primaire arrière 4b s'échappe de la cale arrière 13b. Le connecteur primaire avant 4a se dégage naturellement de la cale avant 13a lorsque le connecteur primaire arrière 4b se décroche du connecteur secondaire arrière 5b.

Comme illustré sur les figures 1, 6, 7, 8, 9 et 10, il est particulièrement avantageux que la face inférieure de la semelle 6 soit courbe. Par « courbe », on entend que la face inférieure de la semelle 6 remonte depuis la zone métatarsienne jusqu'à la pointe avant de la semelle 6 pour suivre la courbure du pied et la courbure de la semelle 6.

Il est également préférable que la surface inférieure du connecteur secondaire avant 5a affleure avec la surface inférieure de la semelle 6 voire soit légèrement enfoncée dans l'épaisseur de la semelle 6. Il est également avantageux que la surface inférieure du connecteur secondaire arrière 5b soit montée affleurante avec la face inférieure de la semelle 6 ou que la face inférieure soit enfoncée à l'intérieure de semelle 6. Les connecteurs secondaires 5a/5b ne sont pas montés en saillie de la semelle pour ne pas gêner la marche comme cela est le cas dans les configurations de l'art antérieur.

Il est préférable que le connecteur secondaire avant 5a vienne en appui sur les faces latérales du creux avant 13a, c'est-à-dire selon la largeur de la semelle 6 sans obligatoirement venir en appui sur la paroi de fond. Cette configuration est mécaniquement plus résistante qu'une cale montée en saillie sur la semelle 6.

Il est préférable que le connecteur secondaire arrière 5b vienne en appui sur au moins une face latérale du creux arrière 13b.

Dans la configuration illustrée, les connecteurs secondaires avant et arrière profitent des faces latérales des cavités pour augmenter de la tenue mécanique conférée par la semelle 6 et ainsi assurer une meilleure tenue au cisaillement lors des opérations de séparation entre la semelle 6 et la pédale 1.

Lorsque l'épaisseur de la semelle 6 est faible, il est avantageux que le creux avant 13a et/ou creux arrière 13b possèdent une hauteur ou profondeur supérieure à l'épaisseur de la semelle 6. Dans ce cas de figure, la face inférieure de la semelle 6 dans le creux avant et/ou arrière se trouve dans un plan au-dessus du plan défini par la face supérieure de la semelle 6 autour de la protubérance associée. En d'autres termes, la zone métatarsienne présente une épaisseur entre la face supérieure et la face inférieure qui est inférieure ou égale à la profondeur du creux arrière 13b. La protubérance permet de renforcer la semelle 6. Le creux avant 13a forme une bosse avant sur la face supérieure et la semelle 6 et le creux arrière 13b forme une bosse arrière sur la face supérieure de la semelle 6. La profondeur du creux avant 13a est supérieure à l'épaisseur de la semelle 6 autour du creux avant 13a et la profondeur du creux arrière 13b est supérieure à l'épaisseur de la semelle 6 autour du creux arrière 13b.

Une partie de l'épaisseur de la protubérance peut être compensée par la ou les couches de confort qui sont disposées sur la face supérieure de la semelle 6 pour séparer le pied et la semelle 6.

Comme indiqué plus haut, il est avantageux que la semelle 6 soit monobloc c'est-à-dire formée par une seule pièce. Il est également avantageux que la semelle 6 ne comporte que la cavité avant et la cavité arrière.

Dans un mode de réalisation, la semelle 6 est intégralement réalisée en matériau composite, par exemple en fibre de carbone. Il est également possible de prévoir une semelle 6 moulée.

## Revendications

1. Pédale automatique pour cycle (1) comportant :
- un arbre de rotation (2) destiné à être fixé à un cycle, l'arbre de rotation (2) s'étendant selon une direction longitudinale (XX), l'arbre de rotation (2) possédant une rainure annulaire (7),
- un corps (3) monté rotatif autour de l'arbre de rotation (2), le corps (3) définissant une cavité destinée à recevoir l'arbre de rotation (2) et possédant un orifice agencé pour déboucher face à la rainure annulaire (7),
- une tige (8) s'insérant dans l'orifice et dans la rainure annulaire (7),
- au moins des premier et deuxième connecteurs primaires (4a, 4b) destinés à coopérer avec au moins des premier et deuxième connecteurs secondaires (5a, 5b) d'une semelle (6) d'une chaussure pour cycle pour fixer la chaussure pour cycle sur le corps (3),
pédale automatique (1) **caractérisée en ce que** la tige (8) bloque le déplacement en translation du corps (3) par rapport à l'arbre de rotation (2) selon la direction longitudinale (XX) et empêche la désolidarisation entre le corps (3) et l'arbre de rotation et **en ce que** l'orifice est un trou borgne.

2. Pédale automatique pour cycle (1) selon la revendication 1, dans laquelle la rainure annulaire (7) est disposée dans le quart terminal selon la direction longitudinale (XX) et opposée à l'extrémité destinée à se fixer sur le cycle.

3. Pédale automatique pour cycle (1) selon l'une des revendications 1 et 2, dans laquelle la cavité destinée à recevoir l'arbre de rotation (2) est une cavité borgne.

4. Pédale automatique pour cycle (1) selon l'une quelconque des revendications précédentes, dans laquelle la tige (8) est munie d'une zone lisse disposée en appui sur la rainure annulaire (7).

5. Pédale automatique pour cycle (1) selon l'une quelconque des revendications 1 à 4, dans laquelle le deuxième connecteur primaire (4b) est monté mobile en translation, préférentiellement le deuxième connecteur primaire (4b) est monté mobile selon une direction perpendiculaire à la direction longitudinale (XX).

6. Pédale automatique pour cycle (1) selon la revendication précédente, dans laquelle le deuxième connecteur primaire (4b) est associé à un ressort (9) agencé pour déplacer le deuxième connecteur primaire (4b) vers le premier connecteur primaire (4a) en l'absence de sollicitation extérieure.

7. Pédale automatique pour cycle (1) selon la revendication précédente, dans laquelle le deuxième connecteur primaire (4b) et le ressort (9) sont formés par une pièce dont une première extrémité forme le deuxième connecteur primaire (4b) et dont la deuxième extrémité forme le ressort (9) et préférentiellement le premier connecteur primaire (4a) est monté fixe sur le corps (3).

8. Pédale automatique pour cycle (1) selon la revendication précédente, dans laquelle le premier connecteur primaire (4a) est monté fixe sur le corps (3) et le premier connecteur primaire (4a) est formé par une zone saillante du corps, préférentiellement le corps (3) possède une face supérieure incurvée pour reproduire la courbure d'un pied entre les orteils et la voute plantaire entre le premier connecteur primaire (4a) et le deuxième connecteur primaire (4b).

9. Ensemble formé par une pédale automatique pour cycle (1) selon l'une quelconque des revendications précédentes et une chaussure pour cycle, la chaussure étant en appui direct sur le corps (3) perpendiculairement à la direction longitudinale de l'arbre de rotation (2) et en appui sur l'arbre de rotation (2) au moyen du corps (3) perpendiculairement à la direction longitudinale de l'arbre de rotation (2), préférentiellement une semelle (6) de la chaussure est en contact direct avec le corps (3) de manière continue entre le premier connecteur primaire (4a) disposé à l'avant du corps (3) et la zone du corps (3) disposée perpendiculairement à la direction longitudinale (XX) de l'arbre de rotation (2).

10. Ensemble selon la revendication 9 dans lequel la chaussure possède une semelle (6) qui définit un creux avant (13a) destiné à être disposé sous des orteils d'un pied et un creux arrière (13b) destiné à être disposé sous la voute plantaire du pied.

11. Ensemble selon la revendication précédente dans lequel le creux avant (13a) forme une première bosse sur la face du dessus de la semelle (6) et le creux arrière (13b) forme une deuxième bosse sur la face du dessus de la semelle (6).

12. Ensemble selon la revendication précédente dans lequel la profondeur du creux avant (13a) est supérieure à l'épaisseur de la semelle (6) autour du creux avant (13a) et la profondeur du creux arrière (13b) est supérieure à l'épaisseur de la semelle (6) autour du creux arrière (13b).

13. Ensemble selon l'une des revendications 9 à 12 dans lequel la chaussure possède une semelle (6) qui définit une surépaisseur centrale destinée à faire face à un talon d'un pied et s'étendant selon la direction longitudinale de la semelle (6) pour augmenter la rigidité d'un talon de la semelle (6).

14. Ensemble selon l'une des revendications 9 à 13 dans lequel la chaussure possède une zone métatarsienne (13c) munie de crampons, les crampons étant montés en saillie de la face de dessous de la semelle (6) et les premier et deuxième connecteurs secondaire (5a, 5b) sont montés affleurant de la face de dessous de la semelle (6).

15. Ensemble selon la revendication précédente dans lequel les crampons sont disposés uniquement autour du corps (3) de la pédale automatique (1) lorsque la chaussure est fixée à la pédale automatique (1).

## Patentansprüche

1. Klickpedal für ein Fahrrad (1), umfassend:
- eine Drehwelle (2), die dazu bestimmt ist, an ein Fahrrad befestigt zu werden, wobei die Drehwelle (2) sich in einer Längsrichtung (XX) erstreckt und die Drehwelle (2) eine Ringnut (7) aufweist,
- einen Körper (3), der um die Drehwelle (2) herum drehbar montiert ist, wobei der Körper (3) einen Hohlraum zur Aufnahme der Drehwelle (2) definiert und eine Öffnung aufweist, die angeordnet ist, um der Ringnut (7) gegenüber zu münden,
- einen Stift (8), der in die Öffnung und in die Ringnut (7) eingeführt ist,
- mindestens einen ersten und einen zweiten Primärverbinder (4a, 4b), die dazu bestimmt sind, mit mindestens einem ersten und einem zweiten Sekundärverbinder (5a, 5b) einer Sohle (6) eines Fahrradschuhs zusammenzuwirken, um den Fahrradschuh am Körper (3) zu befestigen,
wobei das Klickpedal (1) **dadurch gekennzeichnet ist, dass** der Stift (8) die Translationsbewegung des Körpers (3) relativ zur Drehwelle (2) in der Längsrichtung (XX) blockiert und die Entkopplung zwischen dem Körper (3) und der Drehwelle verhindert, und dadurch, dass die Öffnung ein Sackloch ist.

2. Klickpedal für ein Fahrrad (1) nach Anspruch 1, wobei die Ringnut (7) im Endviertel entlang der Längsrichtung (XX) angeordnet ist und entgegengesetzt zu dem Ende ist, das dazu bestimmt ist, an das Fahrrad befestigt zu werden.

3. Klickpedal für ein Fahrrad (1) nach einem der Ansprüche 1 und 2, wobei der Hohlraum zur Aufnahme der Drehwelle (2) ein Blindhohlraum ist.

4. Klickpedal für ein Fahrrad (1) nach einem der vorherigen Ansprüche, wobei der Stift (8) mit einem glatten Bereich versehen ist, der in Auflage auf der Ringnut (7) angeordnet ist.

5. Klickpedal für ein Fahrrad (1) nach einem der Ansprüche 1 bis 4, wobei der zweite Primärverbinder (4b) translationsbeweglich montiert ist, wobei der zweite Primärverbinder (4b) bevorzugt in einer Richtung senkrecht zur Längsrichtung (XX) beweglich montiert ist.

6. Klickpedal für ein Fahrrad (1) nach dem vorherigen Anspruch, wobei der zweite Primärverbinder (4b) mit einer Feder (9) verbunden ist, die angeordnet ist, um den zweiten Primärverbinder (4b) in Abwesenheit einer äußeren Beanspruchung zum ersten Primärverbinder (4a) hinzubewegen.

7. Klickpedal für ein Fahrrad (1) nach dem vorherigen Anspruch, wobei der zweite Primärverbinder (4b) und die Feder (9) durch ein Teil gebildet werden, dessen erstes Ende den zweiten Primärverbinder (4b) bildet und dessen zweites Ende die Feder (9) bildet, und wobei der erste Primärverbinder (4a) bevorzugt fest am Körper (3) angebracht ist.

8. Klickpedal für ein Fahrrad (1) nach dem vorherigen Anspruch, wobei der erste Primärverbinder (4a) fest am Körper (3) angebracht ist und der erste Primärverbinder (4a) durch einen vorspringenden Bereich des Körpers gebildet wird, wobei der Körper (3) bevorzugt eine gekrümmte Oberseite aufweist, um zwischen dem ersten Primärverbinder (4a) und dem zweiten Primärverbinder (4b) die Krümmung eines Fußes zwischen den Zehen und der Fußwölbung nachzubilden.

9. Set, bestehend aus einem Klickpedal für ein Fahrrad (1) nach einem der vorherigen Ansprüche und einem Fahrradschuh, wobei der Schuh senkrecht zur Längsrichtung der Drehwelle (2) in direkter Auflage auf dem Körper (3) ist und senkrecht zur Längsrichtung der Drehwelle (2) über den Körper (3) auf der Drehwelle (2) in Auflage ist, wobei eine Sohle (6) des Schuhs bevorzugt zwischen dem ersten Primärverbinder (4a), der vorne am Körper (3) angeordnet ist, und dem Bereich des Körpers (3), der senkrecht zur Längsrichtung (XX) der Drehwelle (2) angeordnet ist, auf durchgehende Weise mit dem Körper (3) in direktem Kontakt ist.

10. Set nach Anspruch 9, wobei der Schuh eine Sohle (6) aufweist, die eine vordere Höhlung (13a) definiert, die dazu bestimmt ist, unter den Zehen eines Fußes angeordnet zu sein, und eine hintere Höhlung (13b), die dazu bestimmt ist, unter dem Fußgewölbe des Fußes angeordnet zu sein.

11. Set nach dem vorherigen Anspruch, wobei die vordere Höhlung (13a) eine erste Ausbeulung auf der Oberseite der Sohle (6) bildet und die hintere Höhlung (13b) eine zweite Ausbeulung auf der Oberseite der Sohle (6) bildet.

12. Set nach dem vorherigen Anspruch, wobei die Tiefe der vorderen Höhlung (13a) größer ist als die Dicke der Sohle (6) um die vordere Höhlung (13a) herum und die Tiefe der hinteren Höhlung (13b) größer ist als die Dicke der Sohle (6) um die hintere Höhlung (13b) herum.

13. Set nach einem der Ansprüche 9 bis 12, wobei der Schuh eine Sohle (6) aufweist, die eine zentrale Verdickung definiert, die dazu bestimmt ist, einer Ferse eines Fußes gegenüberzustehen, und die sich entlang der Längsrichtung der Sohle (6) erstreckt, um die Steifigkeit eines Absatzes der Sohle (6) zu erhöhen.

14. Set nach einem der Ansprüche 9 bis 13, wobei der Schuh einen Mittelfußbereich (13c) aufweist, der mit Spikes versehen ist, wobei die Spikes von der Unterseite der Sohle (6) vorspringend montiert sind und der erste und der zweite Sekundärverbinder (5a, 5b) bündig mit der Unterseite der Sohle (6) montiert sind.

15. Set nach dem vorherigen Anspruch, wobei die Spikes nur um den Körper (3) des Klickpedals (1) herum angeordnet sind, wenn der Schuh am Klickpedal (1) befestigt ist.

## Claims

1. Automatic pedal for a cycle (1) comprising:
- a rotation shaft (2) designed to be fixed to a cycle, the rotation shaft (2) extending in a longitudinal direction (XX), the rotation shaft (2) comprising an annular groove (7),
- a body (3) mounted rotating around the rotation shaft (2), the body (3) defining a cavity designed to receive the rotation shaft (2) and comprising an opening arranged to open out facing the annular groove (7),
- a rod (8) penetrating into the opening and in the annular groove (7),
- at least first and second primary connectors (4a, 4b) designed to collaborate with at least first and second secondary connectors (5a, 5b) of a sole (6) of a cycling shoe to fix the cycling shoe on the body (3),
automatic pedal (1) **characterised in that** the rod (8) blocks the translational movement of the body (3) with respect to the rotation shaft (2) in the longitudinal direction (XX) and prevents separation between the body (3) and the rotation shaft and **in that** the opening is a blind hole.

2. Automatic pedal for a cycle (1) according to claim 1, wherein the annular groove (7) is arranged in the terminal quarter in the longitudinal direction (XX) and opposite the end designed to be fixed on the cycle.

3. Automatic pedal for a cycle (1) according to one of claims 1 and 2, wherein the cavity designed to receive the rotation shaft (2) is a blind cavity.

4. Automatic pedal for a cycle (1) according to any one of the foregoing claims, wherein the rod (8) is provided with a smooth area arranged pressing on the annular groove (7).

5. Automatic pedal for a cycle (1) according to any one of claims 1 to 4, wherein the second primary connector (4b) is mounted movable in translation, preferentially the second primary connector (4b) is mounted movable in a direction perpendicular to the longitudinal direction (XX).

6. Automatic pedal for a cycle (1) according to the foregoing claim, wherein the second primary connector (4b) is associated with a spring (9) arranged to move the second primary connector (4b) towards the first primary connector (4a) in the absence of external stress.

7. Automatic pedal for a cycle (1) according to the foregoing claim, wherein the second primary connector (4b) and the spring (9) are formed by a part the first end of which forms the second primary connector (4b) and the second end of which forms the spring (9) and preferentially the first primary connector (4a) is mounted fixed on the body (3).

8. Automatic pedal for a cycle (1) according to the foregoing claim, wherein the first primary connector (4a) is mounted fixed on the body (3) and the first primary connector (4a) is formed by an area salient from the body, preferentially the body (3) has a curved upper surface to reproduce the curvature of a foot between the toes and the arch between the first primary connector (4a) and the second primary connector (4b).

9. Assembly formed by an automatic pedal for a cycle (1) according to any one of the foregoing claims and a cycling shoe, the shoe being pressing directly on the body (3) perpendicularly to the longitudinal direction of the rotation shaft (2) and pressing on the rotation shaft (2) by means of the body (3) perpendicularly to the longitudinal direction of the rotation shaft (2), preferentially a sole (6) of the shoe is in direct contact with the body (3) in continuous manner between the first primary connector (4a) arranged at the front of the body (3) and the area of the body (3) located perpendicularly to the longitudinal direction (XX) of the rotation shaft (2).

10. Assembly according to the claim 9, wherein the shoe has a sole (6) that defines a front hollow (13a) designed to be located under the toes of a foot and a rear hollow (13b) designed to be arranged under the arch of the foot.

11. Assembly according to the foregoing claim, wherein the front hollow (13a) forms a first bump on the surface of the top of the sole (6) and the rear hollow (13b) forms a second bump on the surface of the top of the sole (6).

12. Assembly according to the foregoing claim, wherein the depth of the front hollow (13a) is greater than the thickness of the sole (6) around the front hollow (13a) and the depth of the rear hollow (13b) is greater than the thickness of the sole (6) around the rear hollow (13b).

13. Assembly according to one of claims 9 to 12, wherein the shoe has a sole (6) that defines a central extra thickness designed to be facing a heel of a foot and extending in the longitudinal direction of the sole (6) to increase the rigidity of a heel of the sole (6).

14. Assembly according to one of claims 9 to 13, wherein the shoe has a metatarsal area (13c) provided with studs, the studs being mounted salient from the bottom surface of the sole (6), and the first and second secondary connectors (5a, 5b) are mounted flush with the bottom surface of the sole (6).

15. Assembly according to the foregoing claim, wherein the studs are arranged only around the body (3) of the automatic pedal (1) when the shoe is fixed to the automatic pedal (1).
